# EUROPÄISCHE PATENTSCHRIFT

(11) **EP 1 055 914 B1**
(45) Veröffentlichungstag und Bekanntmachung des Hinweises auf die Patenterteilung: **03.11.2004**
(21) Anmeldenummer: 00111383.6
(22) Anmeldetag: 26.05.2000
(51) Int. Cl.: G01D 5/20

(54) **Anordnung magnetischer Positionssensoren**
Arrangement of magnetic position sensors
Dispositif de capteurs magnétiques de position

(30) Priorität: 27.05.1999 DE 19924248
(43) Veröffentlichungstag der Anmeldung: 29.11.2000
(73) Patentinhaber: Tyco Electronics Logistics AG, 9323 Steinach / SG (CH)
(72) Erfinder: Hoffelder, Bernd, 67354 Römerberg (DE); Degen, Michael, 67376 Harthausen (DE)
(74) Vertreter: Klunker . Schmitt-Nilson . Hirsch

(56) Entgegenhaltungen:
- EP-A- 0 191 223
- DE-A- 4 425 904

## Beschreibung

Die Erfindung betrifft eine Anordnung magnetischer Positionssensoren, vorzugsweise zur gleichzeitigen Detektion von Rotation und Translation einer Getriebeschaltwelle.

Bei bekannten Anordnungen zur gleichzeitigen Detektion von Rotation und Translation einer Getriebeschaltwelle kommt eine Kombination eines magnetischen Positionssensors mit einem Schleifpotentiometer zum Einsatz. Solche magnetische Positionssensoren sind bekannt aus DE 44 25 904 A1. Das Schleifpotentiometer dient dabei zur Detektion der Translation und der magnetische Positionssensor zur Detektion der Rotation. Aufgrund der sehr komplexen mechanischen Ansteuerung der Schleifpotentiometer sind diese sehr empfindlich auf Stöße der Schaltwelle und haben daher eine hohe Ausfallwahrscheinlichkeit. Zudem weisen die Schleifpotentiometer mechanischen Verschleiß auf.

Ziel der vorliegenden Erfindung ist es daher, eine Anordnung magnetischer Positionssensoren bereitzustellen, bei der sowohl Rotation als auch Translation berührungslos detektiert werden können, ohne daß die beiden Positionssensoren sich gegenseitig beeinflussen.

Dieses Ziel wird erfindungsgemäß durch eine Anordnung nach Anspruch 1 erreicht. Vorteilhafte Ausgestaltungen der Erfindung und ihre Verwendung sind den weiteren Ansprüchen zu entnehmen.

Die Erfindung besteht in einer Anordnung magnetischer Positionssensoren mit einem ersten Positionssensor, aufweisend eine erste Vorzugsachse entlang derer um einen ersten Kern eine erste Primärwicklung und eine erste Sekundärwicklung angeordnet sind, und mit einem zweiten Positionssensor, aufweisend eine zweite Vorzugsachse, entlang derer um einen zweiten Kern etwa der Länge a eine zweite Primärwicklung der Länge a und eine zweite Sekundärwicklung angeordnet sind, bei der die erste und die zweite Vorzugsachse im wesentlichen senkrecht aufeinander stehen, bei der der erste Positionssensor im Schnittpunkt der beiden Vorzugsachsen angeordnet ist, bei der das dem ersten Positionssensor zugewandte Ende des zweiten Positionssensors von der ersten Vorzugsachse den Abstand b hat, und bei der die zweite Sekundärwicklung am vom ersten Positionssensor abgewandten Ende der zweiten Primärwicklung angeordnet ist.

Durch die erfindungsgemäße Anordnung der zweiten Sekundärwicklung auf der vom ersten Positionssensor abgewandten Seite der zweiten Primärwicklung kann erreicht werden, daß die beiden Positionssensoren sich gegenseitig nicht beeinflussen.

Dies gelingt besonders vorteilhaft mit einem den Positionssensoren zugeordneten Auslöseelement, dritte Vorzugsachse, einem parallel zur und in einem Abstand von der dritten Vorzugsachse angeordneten stabförmigen ersten Permanentmagnet der Länge c und einem bezüglich Rotation um die dritte Vorzugsachse symmetrischen zweiten Permanentmagnet der Länge d, bei der die dritte Vorzugsachse parallel zur und in einem Abstand von der durch die erste und zweite Vorzugsachse definierten Ebene so angeordnet ist, daß ihre senkrechte Projektion auf die genannte Ebene den ersten Positionssensor schneidet, und bei der der erste und der zweite Permanentmagnet so entlang der dritten Vorzugsachse voneinander versetzt angeordnet sind, daß die einander zugewandten Enden der Permanentmagneten voneinander den Abstand e haben.

Der rotationssymmetrische zweite Permanentmagnet liefert dabei ein von seiner Winkelstellung unabhängiges Wegsignal im zweiten Positionssensor. Der entlang der Translationsrichtung ausgerichtete stabförmige erste Permanentmagnet liegt unabhängig von der jeweiligen Verschiebung des Auslöseelements über dem ersten Positionssensor. Durch Rotation des Auslöseelements ändert sich die Lage des zweiten Permanentmagneten bezüglich der ersten Sekundärwicklung, wodurch im ersten Positionssensor ein vom Drehwinkel des Auslöseelementes abhängiges Wegsignal erzeugt wird. Die beiden Positionssensoren beeinflussen sich dabei nicht gegenseitig, da die Permanentmagneten voneinander einen Abstand haben. Der zweite Permanentmagnet erzeugt an seiner Position eine magnetische Sättigung des zweiten Kerns, wodurch der dem ersten Sensor zugewandte Abschnitt des zweiten Sensors vom ersten Permanentmagnet abgeschirmt ist. Diese Sättigung des zweiten Kerns kommt einer Aufteilung des zweiten Positionssensors in einen sensitiven Teil vor dem zweiten Permanentmagnet und einem intensiven Teil hinter dem zweiten Permanentmagnet gleich.

Um eine Translation des Auslöseelementes um eine Länge x entlang der dritten Vorzugsachse bei gleichzeitiger Detektion der Rotation des Auslöseelementes messen zu können, muß für die Größen a, b, c, d und e gelten:
a ist größer oder gleich x, c ist größer oder gleich x und c + e + d ist größer oder gleich b + x. Dadurch ist gewährleistet, daß über dem gesamten Verfahrweg der erste Permanentmagnet über dem ersten Positionssensor liegt und daß der zweite Permanentmagnet über dem zweiten Positionssensor liegt, so daß Weg- und Winkelsignale gemessen werden können.

Besonders vorteilhaft ist eine Verwendung der erfindungsgemäßen Anordnung in einem Getriebe zur Detektion von Rotation und Translation einer Schaltwelle, wobei das Auslöseelement fest mit der Schaltwelle verbunden ist und wobei die Symmetrieachse der Schaltwelle die dritte Vorzugsachse ist.

Im folgenden wird die Erfindung anhand eines Ausführungsbeispiels und den dazugehörigen Figuren näher erläutert.
- Figur 1: zeigt die erfindungsgemäße Anordnung magnetischer Positionssensoren im schematischen Längsschnitt.
- Figur 2: zeigt das mit einer Schaltwelle verbundene Auslöseelement.

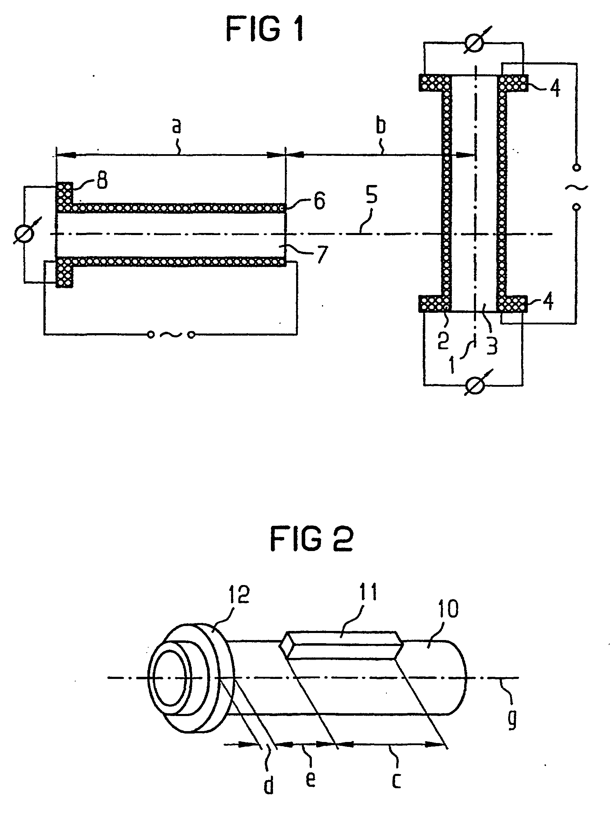

Figur 1 zeigt einen ersten Positionssensor, bei dem entlang einer ersten Vorzugsachse 1 ein erster Kern 3 angeordnet ist. Um diesen Kern ist eine erste Primärwicklung 2 gewickelt. An den beiden Enden der Primärwicklung ist zusätzlich eine erste Sekundärwicklung 4 angeordnet. Durch die erste Primärwicklung 2 fließt ein Wechselstrom, der in der Sekundärwicklung 4 eine elektrische Spannung induziert. Verschiebt man nun einen Permanentmagneten in der Nähe des ersten Positionssensors entlang der ersten Vorzugsachse, so hängt die in den beiden ersten Sekundärwicklungen induzierte Spannung empfindlich von der Stellung des Permanentmagneten ab. Eine Auswertung des Signals erfolgt beispielsweise durch Bildung der Differenz der in den ersten Sekundärwicklungen induzierten Spannungen. In einem Abstand b vom ersten Positionssensor ist ein zweiter Positionssensor der Länge a mit einer zweiten Vorzugsachse 5 dargestellt. Entlang der Vorzugsachse ist ein zweiter Kern 7 der Länge angeordnet. Um den zweiten Kern 7 ist eine zweite Primärwicklung 6 gewickelt. An dem vom ersten Positionssensor abgewandten Ende der zweiten Primärwicklung ist eine zweite Sekundärwicklung 8 angeordnet. Durch die Primärwicklung fließt ein Wechselstrom, der in der Sekundärwicklung eine elektrische Spannung induziert. Diese induzierte Spannung kann von einem in der Nähe des zweiten Positionssensors befindlichen Permanentmagnet, der längs zur zweiten Vorzugsachse 5 verschoben wird, beeinflußt werden.

Figur 2 zeigt die Schaltwelle eines Getriebes 10 entlang einer dritten Vorzugsachse 9. Auf der Schaltwelle 10 ist ein Auslöseelement bestehend aus einem ersten Permanentmagnet 11 der Länge c und einem zweiten Permanentmagnet 12 der Länge d angeordnet. Die beiden Permanentmagneten 11, 12 haben voneinander den Abstand e. Der erste Permanentmagnet ist stabförmig ausgebildet. Ordnet man die Schaltwelle 10 so über die in Figur 1 dargestellte Anordnung magnetischer Positionssensoren an, daß die dritte Vorzugsachse parallel zur und in einem Abstand von der durch die erste und die zweite Vorzugsachse definierten Ebene verläuft und daß ihre senkrechte Projektion auf die genannte Ebene den ersten Positionssensor schneidet, so erfährt der erste Permanentmagnet 11 bei Drehung der Schaltwelle 10 um die dritte Vorzugsachse 9 eine Verschiebung längs der ersten Vorzugsachse 1. Diese Verschiebung des Permanentmagneten 11 kann vom ersten Positionssensor detektiert werden. Die Rotationsbewegung der Schaltwelle 10 um die dritte Vorzugsachse 9 wird gewissermaßen übersetzt in eine Translation entlang der ersten Vorzugsachse 1. Durch die stabförmige Ausbildung des ersten Permanentmagneten 11 kann auch bei Verschiebung der Schaltwelle 10 entlang der dritten Vorzugsachse 9 die Rotationsbewegung der Schaltwelle 10 um die dritte Vorzugsachse 9 vom ersten Positionssensor detektiert werden. Der zweite Permanentmagnet 12 ist rotationssymmetrisch um die dritte Vorzugsachse 9 ausgebildet.

## Patentansprüche

1. Anordnung magnetischer Positionssensoren zur Detektion von Rotation und Translation, mit einem ersten Positionssensor, aufweisend ..
- eine erste Vorzugsachse (1) entlang derer
- um einen ersten Kern(3)
- eine erste Primärwicklung (2) und
- eine erste Sekundärwicklung (4) angeordnet sind,
und mit einem zweiten Positionssensor, aufweisend
- eine zweite Vorzugsachse (5), entlang derer
- um einen zweiten Kern (7) etwa der Länge a
- eine zweite Primärwicklung (6) der Länge a und
- eine zweite Sekundärwicklung (8) angeordnet sind, bei der die erste und die zweite Vorzugsachse (1, 5) im wesentlichen senkrecht aufeinander stehen, bei der der erste Positionssensor im Schnittpunkt der beiden Vorzugsachsen (1, 5) angeordnet ist, bei der das dem ersten Positionssensor zugewandte Ende des zweiten Positionssensors von der ersten Vorzugsachse (1) den Abstand b hat,
und bei der die zweite Sekundärwicklung (8) am vom ersten Positionssensor abgewandten Ende der zweiten Primärwicklung (6) angeordnet ist.

2. Anordnung nach Anspruch 1,
mit einem Auslöseelement, aufweisend
- eine dritte Vorzugsachse (9),
- einen parallel zur und in einem Abstand von der dritten Vorzugsachse (9) angeordneten stabförmigen ersten Permanentmagnet (11) der Länge c
- und einen bezüglich Rotation um die dritte Vorzugsachse (9) symmetrischen zweiten Permanentmagnet (12) der Länge d,
bei der die dritte Vorzugsachse (9) parallel zu und in einem Abstand von der durch die erste und zweite Vorzugsachse (1, 5) definierten Ebene so angeordnet ist,
daß ihre senkrechte Projektion auf die genannte Ebene den ersten Positionssensor schneidet,
und bei der der erste und der zweite Permanentmagnet (11, 12) so entlang der dritten Vorzugsachse (9) voneinander versetzt angeordnet sind, daß die einander zugewandten Enden der Permanentmagneten (11, 12) voneinander den Abstand e haben.

3. Anordnung nach Anspruch 2 zur gleichzeitigen Detektion der Rotation des Auslöseelementes um die dritte Vorzugsachse (9) und der Translation des Auslöseelementes um eine Länge x entlang der dritten Vorzugsachse (9), bei der die Größen a, b, c, d und e so gewählt sind, daß gilt:
a ist größer oder gleich x, c ist größer oder gleich x und c + e + d ist größer oder gleich b + x.

4. Verwendung der Anordnung nach Anspruch 3 in einem Getriebe zur Detektion von Rotation und Translation einer Schaltwelle (10), wobei das Auslöseelement fest mit der Schaltwelle (10) verbunden ist und wobei die Symmetrieachse der Schaltwelle (10) die dritte Vorzugsachse (9) ist.

## Claims

1. Magnetic position sensor arrangement for detecting rotation and translation, with a first position sensor comprising:
- a first preferred axis (1), along which
- a first primary winding (2) and
- a first secondary winding (4) are arranged
- around a first core (3),
and with a second position sensor comprising:
- a second preferred axis (5), along which
- a second primary winding (6) of length a and
- a second secondary winding (8) are arranged
- around a second core (7) of approximate length a,
wherein the first and the second preferred axes (1, 5) are substantially perpendicular to each other, wherein the first position sensor is arranged at the intersection of the two preferred axes (1,5), wherein the end of the second position sensor that faces the first position sensor is at a distance b from the first preferred axis (1), and wherein the second secondary winding (8) is arranged at the end of the second primary winding (6) that is remote from the first position sensor.

2. Arrangement according to claim 1, with a releasing element, comprising:
- a third preferred axis (9),
- a first, rod-shaped, permanent magnet (11) of length c, arranged parallel to and at a distance from the third preferred axis (9),
- and a second permanent magnet (12) of length d, which is rotationally symmetrical about the third preferred axis (9),
wherein the third preferred axis (9) is arranged parallel to and at a distance from the plane defined by the first and second preferred axes (1, 5), such that its perpendicular projection onto said plane crosses the first position sensor, and wherein the first and the second permanent magnets (11, 12) are offset from each other along the third preferred axis (9), such that the ends of the permanent magnets (11, 12) that face each other are at a distance e from one another.

3. Arrangement according to claim 2 for simultaneously detecting the rotation of the releasing element about the third preferred axis (9) and the translation of the releasing element about a length x along the third preferred axis (9), wherein the variables a, b, c, d and e are selected such that: a is greater than or equal to x, c is greater than or equal to x, and c + e + d is greater than or equal to b + x.

4. Use of the arrangement according to claim 3 in a gear unit for detecting rotation and translation of a feed shaft (10), the releasing element being rigidly connected to the feed shaft (10) and the axis of symmetry of the feed shaft (10) being the third preferred axis (9).

## Revendications

1. Assemblage de capteurs de position magnétiques servant à la détection de la rotation et de la translation, comprenant un premier capteur de position, comportant
- un premier axe préférentiel (1), le long duquel
- un premier enroulement primaire (2) et
- un deuxième enroulement primaire (4) sont agencés
- autour d'un premier noyau (3), et
comprenant un deuxième capteur de position, comportant
- un deuxième axe préférentiel (5), le long duquel
- un deuxième enroulement primaire (6) de longueur a et
- un deuxième enroulement secondaire (8) sont agencés
- autour d'un deuxième noyau (7) de longueur a,
les premier et deuxième axes préférentiels (1, 5) étant pour l'essentiel perpendiculaires, le premier capteur de position étant agencé au niveau du point d'intersection des deux axes préférentiels (1, 5), l'extrémité du deuxième capteur de position orientée vers le premier capteur de position étant espacé du premier axe préférentiel (1) de la distance b, et le deuxième enroulement secondaire (8) étant agencé au niveau de l'extrémité du deuxième enroulement primaire (6) opposée au premier capteur de position.

2. Assemblage selon la revendication 1, comprenant un élément de déclenchement, comportant:
- un troisième axe préférentiel (9);
- un premier aimant permanent (11) en forme de barreau de longueur c, agencé parallèlement au troisième axe préférentiel (9) est à une certaine distance de celui-ci;
- et un deuxième aimant permanent (12) de longueur d symétrique en rotation autour du troisième axe préférentiel;
le troisième axe préférentiel (9) étant agencé dans un plan parallèle aux premier et deuxième axes préférentiels défini par les premier et deuxième axes préférentiels (1, 5), de sorte que son débordement perpendiculaire sur ledit plan coupe le premier capteur de position;
les premier et deuxième aimants permanents (11, 12) étant décalés le long du troisième axe préférentiel (9) de sorte que les extrémités orientées l'une vers l'autre des aimants permanents (11, 12) sont espacés de la distance e.

3. Assemblage selon la revendication 2, servant à la détection simultanée de la rotation de l'élément de déclenchement autour du troisième axe préférentiel (9) et de la translation de l'élément de déclenchement sur une longueur x le long du troisième axe préférentiel (9), les dimensions a, b, c, d et e étant choisies de sorte à établir la relation ci-dessous:
la dimension a est supérieure ou égale à x, la dimension c étant supérieure ou égale à x et les dimensions c + e + d étant supérieures ou égales à b + x.

4. Utilisation de l'assemblage selon la revendication 3 dans une boîte de vitesse pour la détection de la rotation et de la translation d'un arbre de commande (10), l'élément de déclenchement étant fermement relié à l'arbre de commande (10), l'axe de symétrie de l'arbre de commande (10) étant constitué par le troisième axe préférentiel.
